Europäisches Patentamt

European Patent Office

Office européen des brevets

(11) Numéro de publication: **0 202 167**
**B1**

(12) **FASCICULE DE BREVET EUROPEEN**

(45) Date de publication du fascicule du brevet:
**31.01.90**

(51) Int. Cl.⁴: **B23K 3/02, B23K 3/04**

(21) Numéro de dépôt: **86401011.1**

(22) Date de dépôt: **12.05.86**

(54) **Fer à souder chauffé par résistance bobinée à haute isolation.**

(30) Priorité: **13.05.85 FR 8507221**

(43) Date de publication de la demande:
**20.11.86 Bulletin 86/47**

(45) Mention de la délivrance du brevet:
**31.01.90 Bulletin 90/5**

(84) Etats contractants désignés:
**BE CH DE GB IT LI NL**

(56) Documents cités:
**FR-A- 657 128**
**FR-A- 2 515 550**
**US-A- 2 014 567**
**US-A- 2 998 503**

(73) Titulaire: **GUILBERT EXPRESS S.A., 10-12, rue Montlouis, F-75011 Paris(FR)**

(72) Inventeur: **Le Marchand, Alain, 9, rue du Douaire, F-95570 Villaines Sous Bois(FR)**
Inventeur: **Moumaneix, Francis, 59, boulevard du Midi, F-93340 Le Raincy(FR)**

(74) Mandataire: **Piaçais, Jean-Yves et al, Cabinet Netter 40, rue Vignon, F-75009 Paris(FR)**

ACTORUM AG

## Description

L'invention concerne les fers à souder électriques.

Comme pour de nombreux autres appareils électriques, on souhaite maintenant que les fers à souder soient agencés en "double isolation".

Il a été proposé de le faire en partant de résistances de chauffe sérigraphiées. Actuellement, cette technique ne donne pas satisfaction, notamment pour des raisons de tenue dans le temps.

Certaines spécificités des fers à souder utilisant une résistance bobinée rendent particulièrement difficile l'obtention d'une haute isolation; il en est de même pour satisfaire les autres tests que comportent les normes dites de "double isolation".

La publication de brevet FR-A 2 515 550 a apporté certains enseignements utiles à cet effet. Toutefois, il s'est avéré que le fer à souder fabriqué selon ces enseignements est encore assez onéreux, ce qui nuit au développement, pourtant souhaitable, des fers à double isolation.

La présente invention a notamment pour but de résoudre ce problème.

Un autre but de l'invention est de limiter autant que possible les transferts thermiques entre les parties métalliques d'un fer et le manche de celui-ci.

L'invention vise aussi à simplifier et automatiser la fabrication des fers à souder.

Le fer à souder proposé par l'invention est du type comportant une poignée isolante munie d'un côté d'un câble souple d'alimentation électrique, et prolongée de l'autre côté d'un cache métallique, logeant un corps de chauffe, et susceptible de recevoir en son nez une panne de soudage, dans lequel le corps de chauffe comprend un tube isolant central formant support pour une résistance chauffante en fil fin bobiné, et un tube isolant formant enveloppe, logé entre le tube central et le cache cylindrique externe tandis qu'un tube isolant de manche est logé dans ledit cache, entre l'intérieur de la poignée et le corps de chauffe, et que deux fils de liaison dits ligatures partent de connecteurs situés dans la poignée, et s'étendent dans des gaines à l'intérieur du tube isolant de manche, pour rejoindre respectivement les deux extrémités de la résistance de fil bobiné, le tube enveloppe recevant en pénétration axiale au moins une pièce isolante, sensiblement de révolution, traversée en son centre par les ligatures, et dépassant axialement le point conducteur le plus en aval de la résistance ou de la ligature reliée en aval à celle-ci, et est caractérisé en ce que le tube enveloppe est cylindrique de section droite constante, que ladite pénétration axiale se fait sur une longueur telle que la plus courte distance entre chacune des ligatures et le manchon métallique externe, prise en ligne brisée dans l'air le long de ladite pièce isolante, soit au moins égale à 9,5 mm et en ce que ledit dépassement axial du tube enveloppe est d'au moins 9,5 mm, ce qui permet d'obtenir un fer à haute isolation.

Très avantageusement, certains au moins des tubes isolants sont réalisés en une matière céramique, de densité au moins égale à 2,8 ou 3, typiquement voisine de 3,6.

De préférence, la céramique est chargée d'au moins un oxyde ou un sel métallique augmentant sa compacité tel qu'un oxyde, un phosphate, un silicate, un sulfate ou un carbonate de zirconium, d'aluminium, de magnésium ou de baryum.

Selon un autre mode particulier de réalisation de l'invention, le tube support de résistance est immobilisé longitudinalement par rapport à la paroi radiale interne du corps de chauffe du nez du fer, ainsi que par rapport à un appui logé dans la poignée du fer, solidairement de celle-ci.

Dans les fers puissants, la panne est reçue dans une douille pénétrant coaxialement le corps de chauffe, et le tube support de résistance est emmanché partiellement sur cette douille.

Selon un autre mode particulier de réalisation de l'invention, ce tube support et son tube enveloppe s'appuient conjointement sur une rondelle d'amortissement, du côté du nez du fer, tandis qu'à l'autre extrémité, le tube enveloppe, qui déborde largement le tube support de résistance, reçoit en pénétration axiale un bouchon isolant, sensiblement de révolution, creusé en son centre pour recevoir à son tour en pénétration axiale le tube de manche, des perforations de ce bouchon permettant le passage des ligatures vers la résistance de fil bobiné. La distance la plus courte, comme défini plus haut, est alors mesurée d'une part en cheminant entre le bouchon et le tube enveloppe, d'autre part en cheminant entre le bouchon et le tube isolant de manche.

Très avantageusement, un dispositif de centrage souple du tube de manche à l'intérieur du bouchon est défini par les fils de ligature traversant de façon tendue les perforations du bouchon. De préférence, la distance radiale entre les extrémités opposées des perforations du bouchon est sensiblement égale au diamètre intérieur du tube isolant de manche, ou légèrement supérieure à celui-ci.

Pour des fers moins puissants, la panne est reçue dans un alésage limité au nez du fer. Dans ce cas, l'invention prévoit que le tube enveloppe, qui s'appuie longitudinalement sur la paroi radiale interne du nez, loge intérieurement un bouchon, sur lequel s'appuie à son tour, longitudinalement, le tube support de résistance, lequel est maintenu à son autre extrémité par le tube de manche. De plus, le tube enveloppe peut être solidarisé, en particulier par collage-cimentage, du tube support de résistance et/ou du tube de manche.

Selon une autre mode particulier de réalisation de l'invention, les ligatures sont constituées de deux gros fils vrillés avec le fil fin de résistance selon un pas inférieur à 1,5 mm, environ, de préférence égal à 0,5 mm environ.

Selon encore une autre caractéristique de l'invention, applicable à tous les fers, le manchon métallique est reçu dans la poignée du fer par fixation sur des points répartis d'une rondelle, dégagée par ailleurs de la périphérie du manchon, et sur laquelle est fixé extérieurement un radiateur de forme générale annulaire.

Un autre mode particulier de réalisation de l'invention réside en ceci: à l'opposé du radiateur, la rondelle reçoit en périphérie avec immobilisation angulaire une pièce isolante allongée, fendue, côté rondelle pour permettre au montage du fer le passage des ligatures, vers son centre, où elle est munie d'un épaulement d'appui pour le tube isolant de manche, cette pièce isolante comportant ensuite deux plateaux, échancrés pour la réception enclipsée de vis de connecteurs pré-montés sur les ligatures, et séparés l'un de l'autre par au moins une cloison isolante.

En variante de la double isolation, la cloison est au moins en partie dédoublée, pour permettre le passage d'un fil de terre, lequel rejoint les parties métalliques du fer à travers un passage ménagé dans la partie annulaire de ladite pièce, côté rondelle, à l'opposé de sa fente.

D'autres caractéristiques et avantages de l'invention apparaîtront à l'examen de la description détaillée ci-après, et des dessins annexés, sur lesquels :

- la figure 1 est une vue en coupe longitudinale d'une partie d'un fer basse puissance selon l'invention;
- la figure 2 est une vue en coupe longitudinale d'une partie d'un fer de plus forte puissance selon l'invention;
- la figure 3 est une vue en coupe de l'autre partie du fer de la figure 2, mais s'applique également pratiquement sans modification au fer de la figure 1;
- les figures 3A à 3D sont des coupes transversales prises selon les lignes de coupe A-A à D-D sur la figure 3;
- la figure 4 est une vue en perspective d'une pièce de la figure 3; et
- la figure 5 est une vue en perspective d'une autre pièce de la figure 3.

L'homme de l'art comprendra que la géométrie intervient souvent dans la présente invention. Par ailleurs, la plupart des dessins sont à l'échelle, et très agrandis, ce qui fait qu'ils apportent des informations de caractère manifeste et certain. En conséquence, les dessins sont incorporés à la description, pour compléter celle-ci, et servir le cas échéant à la définition de l'invention. Il en est de même pour la constitution générale d'un fer à souder, telle que définie dans la publication-brevet FR-A-2 515 550.

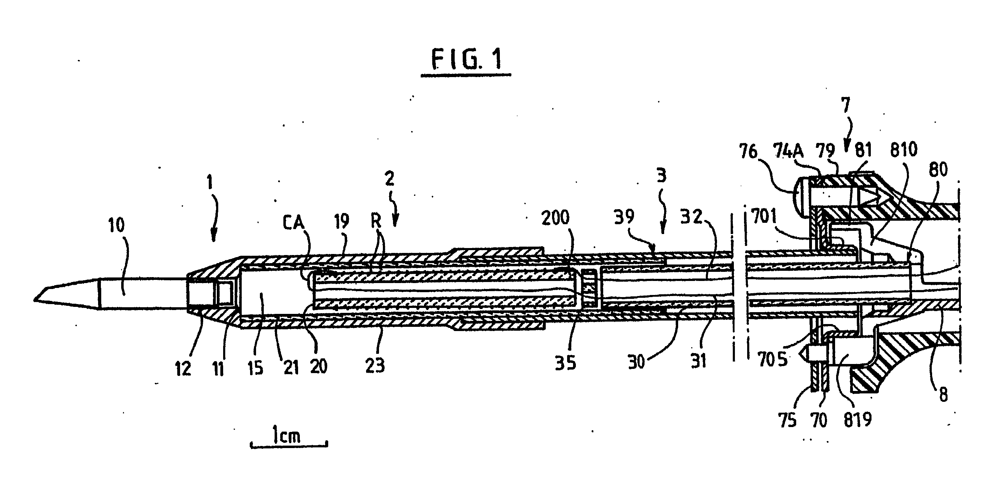

Le fer de petite puissance de la figure 1 comporte un nez 1, muni d'un alésage central 12 dans lequel vient se visser une panne 10, en cuivre.

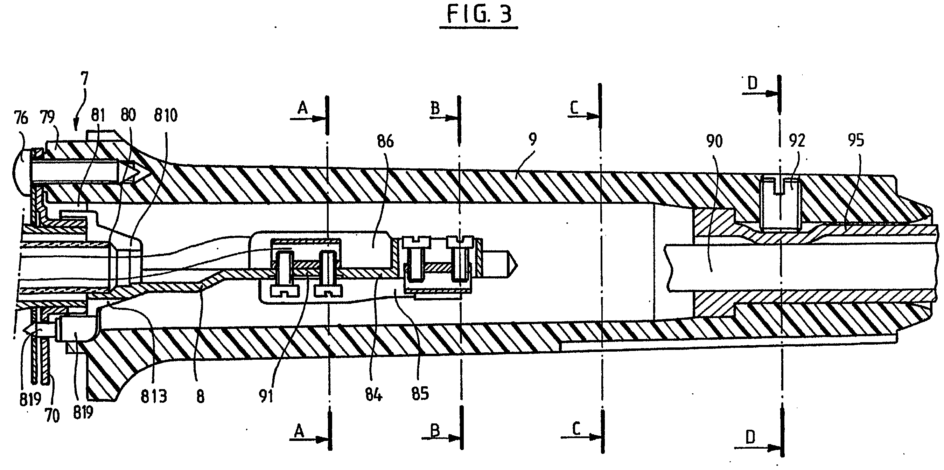

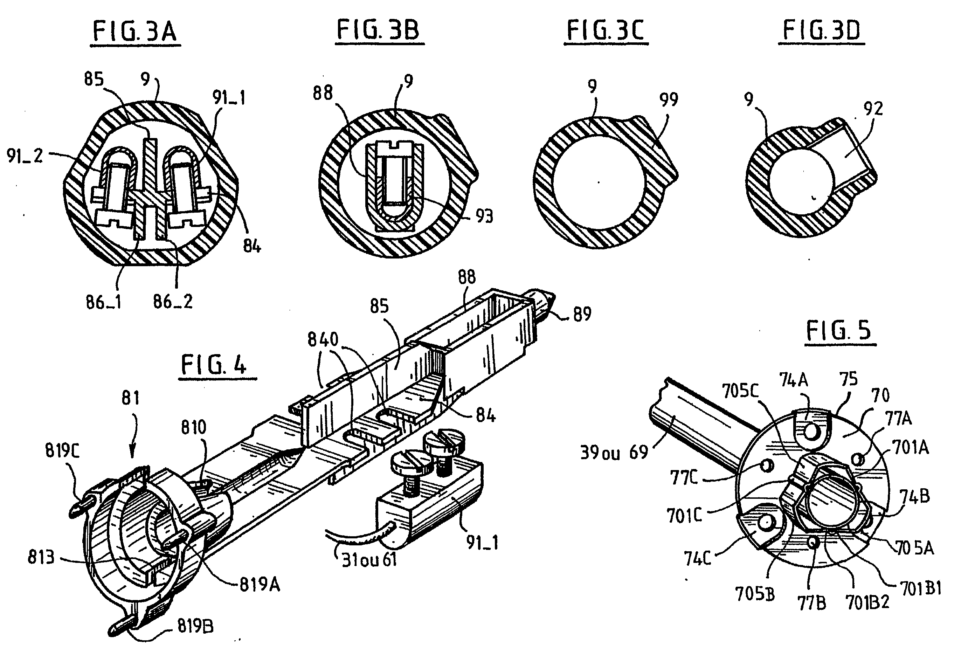

Le nez 1, qui est par exemple en laiton, fait partie d'une pièce de forme générale cylindrique 19, qui vient se visser sur un manchon tubulaire 39, également cylindrique et métallique. La pièce 39 entre dans l'extrémité chaude 7 de la poignée 9 du fer, visible intégralement sur la figure 3. Les pièces 19 et 39 forment le cache du fer.

L'extrémité 7 de la poignée comporte, en un point de sa périphérie annulaire, une saillie 79 tournée vers la panne 10, et parallèle à l'axe de celle-ci. Cette saillie 79 possède une face radiale formant butée longitudinale pour une rondelle métallique 70. C'est dans le repli central 701 de la rondelle 70 que vient se loger le manchon métallique 39. Le manchon n'est tenu par la rondelle 70 qu'en quelques points 701 (par exemple trois) espacés sur sa périphérie. En les autres points, comme 705, le repli de la rondelle 70 est distant de la paroi du tube 39. Ceci réduit les ponts thermiques constitués par la rondelle 70 entre la partie chaude du fer et la poignée elle-même. En appui sur la rondelle 70, vient un dégagement 74A de la rondelle 70, centré sur la vis 76 qui maintient l'ensemble sur la saillie 79 déjà citée. Par dessus le dégagement 74A, la vis 76 fixe encore une pièce 75, métallique, formant radiateur. On observe que ce radiateur 75 n'est en contact thermique avec la rondelle 70 que par ses dégagements tels que 74A, et qu'il est pour le reste pratiquement totalement dégagé dans l'air, ce qui contribue à son bon fonctionnement.

Les pièces 70 et 75 sont maintenues en position relative coaxiale par des tétons tels que 819, faisant partie de l'extrémité 81 d'une pièce isolante 8, sur laquelle on reviendra plus loin. Il convient toutefois de remarquer immédiatement l'épaulement 80 de cette pièce 8, qui va servir de butée longitudinale.

La partie chaude du fer peut être décomposée en un corps de chauffe 2, et un manchon de liaison 3.

Le corps de chauffe 2 est logé en grande partie à l'intérieur du tube 19, mais aussi à l'intérieur du tube 39, les parois cylindriques internes de ces deux tubes étant alignées.

Ils peuvent ainsi loger un tube enveloppe 21, en matériau isolant. L'extrémité gauche de celui-ci est en appui longitudinal sur une surface de butée radiale 11 du nez 1 du fer.

A partir de là, sur une distance longitudinale d'au moins 9,5 mm, ici 10 mm, l'intérieur du tube 21 est au moins en partie rempli d'un bouchon 15 d'un matériau de cimentage isolant, tel qu'un ciment réfractaire à base de phosphate de zirconium et de magnésium tenant à très haute température (jusqu'à 1500°C). Un tel ciment est fabriqué notamment par la Société suisse SAUEREISEN sous la référence ciment n° 8.

Un tube interne 20 est collé sur ce bouchon 15, tout en étant logé étroitement à l'intérieur du tube externe 21.

En périphérie, le tube 20 forme support pour des fils fins, bobinés, définissant la résistance de chauffe R. Celle-ci est délimitée par au moins une, de préférence deux gorges annulaires.

Côté panne, l'extrémité de la résistance est reprise par une ligature 31, logée au départ dans la gorge, et qui passe ensuite en CA sur l'extrémité du tube 20, pour revenir par le trou central de celui-ci. A l'autre extrémité, part également une ligature 32 logée au départ dans l'autre gorge. Les deux ligatures 31 et 32 se rejoignent pour traverser un insert isolant guide-fil 35, après lequel elles s'engagent dans des gaines, pour former la liaison électrique vers des connecteurs que l'on décrira plus loin. Les ligatures 31 et 32 sont sectionnées au niveau de ces connecteurs. Il est apparu important que les gorges précitées soient en V, pour participer à l'immobilisation en rotation de ladite ligature.

Dans le manchon 3, les ligatures passent à l'intérieur d'un tube de manche 30 en matériau isolant.

La figure 1 montre que ce tube de manche 30 s'engage nettement à l'intérieur du tube enveloppe 21, de sorte que la distance entre les ligatures 31, 32 et le cache métallique 39, en cheminement entre les tubes 21 et 30, est supérieure à 9,5 mm.

Il s'est avéré que ceci est nécessaire pour obtenir la très forte opposition au passage du courant correspondant à la norme double isolation.

On sait que l'isolation électrique va tenir à trois facteurs :
- l'isolation dans l'air;
- l'isolation à travers les isolants;
- l'isolation à l'encontre des courants de cheminement sur les contours des isolants, qui peuvent être munis de dépôts partiellement conducteurs, notamment l'humidité.

Or les essais de double isolation nécessitent une tenue sous une tension de 3750 volts à chaud, et après les tests d'humidité.

Il s'est avéré nécessaire pour cela que la longueur de cheminement entre les parties sous tension telles que les ligatures ou la résistance et les parties conductrices accessibles telles que 19 et 39 soit au moins égale à 9,5 mm.

Cette condition est réalisée par l'engagement profond du tube 30 à l'intérieur du tube 21.

A l'autre extrémité, elle est également réalisée par le fait que le conducteur extrême CA de la ligature 31 est à plus de 9,5mm des parties conductrices du nez 1 du fer.

Par ailleurs, on sait réaliser les tubes isolants d'un fer à souder en des matériaux isolants convenables, mais ceux-ci sont onéreux.

L'invention prévoit que certains au moins des tubes isolants soient réalisés en une céramique qui est par exemple filée ou pressée à froid, de manière à posséder une densité au moins égale à 2,8 ou 3.

En effet, les densités de l'ordre de 2,6 utilisées jusqu'à présent laissent subsister une porosité assez importante, qui s'est avérée lors d'essais de longue durée poser des problèmes d'insuffisance d'isolation électrique à travers le matériau.

Il est avantageux que cette céramique soit chargée d'oxyde ou d'un sel de zirconium, d'aluminium, de magnésium ou de baryum, de préférence possédant une densité d'environ 3,6. Ce matériau, qui présente aussi l'avantage d'être peu onéreux, s'est avéré convenir pour la réalisation de fers en double isolation. Ledit sel peut être un silicate, un phosphate, un sulfate ou un carbonate.

Enfin, il est nécessaire que le fer puisse résister à des chutes au cours desquelles il tomberait soit panne en avant, soit latéralement.

Cet essai est particulièrement contraignant.

L'invention prévoit que le tube support de résistance 20 est immobilisé longitudinalement d'un côté par rapport à la paroi radiale interne 11 du nez du corps de chauffe, à travers le bouchon 15, de l'autre par rapport à un appui 80 déjà mentionné, et logé dans la poignée 9 du fer, solidairement de celle-ci.

De plus, il est avantageux que le tube de manche 30 soit collé sur le tube enveloppe 39, à l'aide d'une colle telle que le ciment-colle n° 8 vendu par la Société suisse SAUEREISEN (phosphates de zirconium et de magnésium).

A cet égard, on notera que les dessins annexés sont à grande échelle. les jeux qu'ils font apparaître, parfois un peu agrandis pour améliorer la clarté, sont largement supérieurs à la réalité.

Avec les mesures qui précèdent, et compte tenu de la rigidité que présentent les ligatures 31 et 32, et de la tension légère qui leur est impartie, on obtient un ensemble relativement rigide qui s'étend depuis l'appui 80 jusqu'à l'avant du fer.

Ceci permet au fer de résister aux essais de chocs.

Pour leur donner une bonne rigidité, les ligatures sont constituées de deux gros fils vrillés avec le fil fin de résistance, mais ceci selon un pas de l'ordre de 0,5 mm environ, contrairement au pas de vrillage beaucoup plus élevé de la technique antérieure. Il s'est avéré que cette mesure présente de nombreux avantages pratiques, notamment lorsqu'on coupe une telle ligature, et aussi lorsqu'on l'insère dans un connecteur.

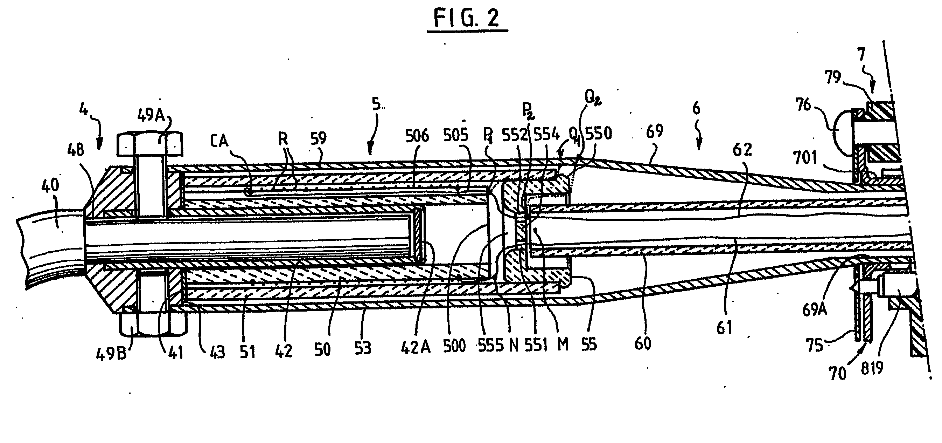

Il est maintenant fait référence à la figure 2, qui illustre un fer de forte puissance, et dans laquelle on retrouvera beaucoup de caractéristiques déjà exposées.

Le logement de la panne 40 s'effectue non seulement dans le nez 4 du fer, où ladite panne est maintenue par une vis 49A, mais aussi dans une douille 42 qui s'étend largement à l'intérieur du corps de chauffe 5. Comme on le verra plus loin, cette douille va presque jusqu'à l'extrémité de la résistance.

La douille 42 qui s'engage dans le nez 4 en affleurement de son alésage propre 48 est maintenue en place par serrage, tout en étant percée pour permettre le passage de la vis 49A servant au maintien de la panne 40.

Les deux vis 49A·et 49B assurent la fixation sur le nez 4 de la paroi métallique externe 59 du corps de chauffe. Cette paroi 59 est cylindrique au droit du corps de chauffe. Elle se prolonge en 69 de façon conique, jusqu'à son extrémité amont 69A, où elle redevient cylindrique, pour s'engager sur la rondelle 70, de la manière déjà décrite pour le fer de faible puissance en référence à la figure 1.

On remarquera toutefois que la figure 2 ne fait pas apparaître le dégagement tel que 705 entre la rondelle 70 et le cylindre métallique 69A. Cela est dû au fait que les points d'appui 701 sur cette extrémité 69A possèdent maintenant une symétrie d'ordre pair, ce qui les rend invisibles dans le plan de la figure 2.

On retourne maintenant à l'autre extrémité du fer.

La douille 42 est logée de façon étanche dans le nez 4. Elle est également fermée à son extrémité droite par un bouchon étanche 42A. Elle interdit ainsi toute communication entre l'intérieur du corps de chauffe et l'extérieur du fer.

A l'intérieur du corps de chauffe, la paroi externe de cette douille 42 reçoit coaxialement, et à emmanchement partiel, le tube support de résistance 50. A droite, le nez 4 définit à l'intérieur du corps de chauffe une paroi radiale annulaire 41, munie d'une rondelle d'amortissement 43, qui est par exemple en mica. Sur cette rondelle 43 s'appuie le tube support de résistance 50. Son tube enveloppe 51, qui entoure coaxialement et étroitement le tube 50, s'appuie également sur cette rondelle 43.

Le point aval extrême CA de la résistance est à au moins 9,5 mm de la paroi de mica 43. On notera aussi que ce point aval CA est relié à la ligature 62 par le fait que celle-ci traverse une rainure 505 ménagée selon une génératrice de la paroi externe du tube 50. On a schématisé en 506 une épaisseur d'isolant tel que du mica, qui est interposé entre les fils de la résistance R elle-même et la ligature 62 qui passe dans la rainure.

Dans la présente description, l'expression "mica" couvre le cas d'un mica dit reconstitué, qui se présente en paillettes ou en feuilles, comme le sait l'homme de l'art.

Du côté amont, c'est-à-dire du côté du manche, le tube enveloppe 51 déborde largement le tube 50, dans le sens longitudinal. A ce niveau, le tube 51 loge un bouchon 55, dont la section droite est en forme générale de U. On note que les coins externes 550 de ce bouchon sont chanfreinés, ce qui s'est avéré important pour les essais de chocs. Le creux défini dans le bouchon reçoit le tube de manche 60. Une première distance de cheminement va du point $P_1$ de la ligature 62 au point $Q_1$ du cache 59. Une seconde distance de cheminement va d'un point $P_2$, situé sur la ligature 62, en sortie de gaine, et le point $Q_2$ du cache 59 et 69. Ces deux distances sont supérieures à 9,5 mm.

Au fond de son U, le bouchon 55 comporte une paroi, munie de deux perforations opposées 551 et 552, et suivie d'un évidement 555, évasé du côté du tube support de résistance 50. Les ligatures 61 et 62 sont gainées à l'intérieur du tube de manche 60. La gaine est par exemple réalisée en tissu de fibre de verre imprégné de produit silicone. Du côté droit, ces gaines s'étendent jusqu'au connecteur.

A l'extrémité gauche du tube 60, les ligatures sortent de leurs gaines pour s'engager immédiatement dans les orifices 551 et 552, puis rejoindre les points $P_1$ et N où elles arrivent sur le tube support de résistance 50.

Un point M est défini par le point de symétrie des ligatures, au voisinage de l'extrémité gauche du tube de manche 60.

En interaction avec les formes des orifices 551 et 552, de l'évasement 555, et la rigidité de leurs gaines, les ligatures définissent un V (bras MN et $MP_1$), qui centre de manière souple le tube isolant de manche 60, malgré le jeu existant en sa paroi externe et le diamètre intérieur du bouchon 55.

En effet, les ligatures tendues 61 et 62 s'appuient respectivement sur les bords opposés des orifices 551 et 552 (elles ne sont pas représentées tendues pour conserver la lisibilité des figures). Ce faisant, elles s'appuient intérieurement sur le tube de manche, qu'elles centrent. Bien entendu, elles s'appuient aussi, dans une certaine mesure, sur l'extrémité du tube 50.

Pour sa part, le tube enveloppe 51 est maintenu par le bouchon 55, maintenu à son tour par l'appui à l'intérieur de celui-ci du tube de manche 60, tenu à l'autre extrémité par l'épaulement 80. (Il est rappelé que, compte tenu de la grande échelle des figures, les jeux apparaissent largement exagérés.)

Pour le reste, le fer puissant de la figure 2 reprend les autres caractéristiques de la présente invention, et notamment :

-l'usage d'une céramique filée ou pressée à froid, de préférence de la céramique particulière mentionnée plus haut;
- le vrillage à pas réduit des ligatures, qui sont logées à l'intérieur de gaines souples en fibre de verre imprégnée;
- la disposition particulière de la tête 7 de la poignée pour former un barrage thermique entre le corps de chauffe et la poignée.

Cette dernière disposition permet de réaliser la poignée en une matière thermoplastique (c'est-à-dire synthétique) qui est chargée de fibre de verre, tout en demeurant moulée par injection, par opposition aux matières thermodurcissables comprimées, telles que les bakélites, que l'on utilise dans la technique antérieure lorsque le pont thermique entre le corps de chauffe et la poignée est trop important.

De préférence, le matériau constitutif des tubes isolants est une céramique de couleur rose, vendue par la Société italienne MIES, et comprenant environ 80% de silicate de magnésium (talc), 12% de carbonate de baryum et 8% d'argile, comme liant.

Les dispositions qui précèdent ont essentiellement pour but de permettre la réalisation de fers conformes aux normes double isolation. Ces normes comportent notamment des essais électriques à haute tension, des essais d'humidité et des essais de chocs.

Le concept de double isolation suppose que l'on ait une double épaisseur d'isolant entre les parties conductrices sous tension, et la masse conductrice de l'appareil, ou plus exactement ses parties métalliques externes.

Dans le domaine des fers électriques, dont le but est de faire passer de la chaleur entre un fil conducteur résistant, par définition sous tension, et une panne externe métallique, par essence accessible à l'usager, il a été considéré que le doublement de l'isolation est pratiquement impossible. En conséquence, il a été admis que l'on puisse utiliser une seule épaisseur d'isolant, pourvu que celle-ci satisfasse des normes impliquant des courants de fuite extrêmement bas. C'est ce que permet le fer de la présente invention.

Il faut encore que le fer conserve ces courants de fuite extrêmement bas, lorsqu'il est chaud, après avoir subi des essais à l'humidité, et un essai de choc préalable.

Les dispositions qui précèdent permettent d'accéder à la qualification double isolation, sans pour autant que les fers à souder ainsi obtenus ne deviennent excessivement onéreux.

A cet égard, on examinera maintenant tout d'abord les grandes lignes de la construction du corps de chauffe du fer à souder, ensuite l'implantation de celui-ci sur la poignée, en même temps que la construction de celle-ci.

Dans le fer à souder de la figure 1, on fixe d'une part le tube 39 sur la rondelle dégagée 70, ce sous-ensemble étant vissé et collé sur le tube externe métallique 19. Les ligatures de la résistance reçoivent d'abord l'insert 35, puis le gainage, tout en étant enfilées dans le tube de manche 30. Les connecteurs d'extrémités sont montés et d'ores et déjà serrés sur les ligatures. Le corps de chauffe complet est alors enfilé dans l'ensemble 39 + 19 + 70.

Le montage du corps de chauffe de la figure 2 est sensiblement le même, remarque étant faite qu'il s'ouvre entre le nez 4 et le tube 59.

Il sera maintenant fait référence aux figures 3, 4 et 5.

La figure 5 montre les points de fixation 701A, 701B1, 701B2 et 701C que comporte le centre embouti de la rondelle 66. On distingue aussi les parties 705A, 705B et 705C de ce centre embouti qui sont dégagées par rapport à l'extrémité du tube 39 ou 69. On voit encore les parties 74A, 74B, 74C, en forme de secteurs, qui forment la saillie dans le sens axial sur lesquels s'appuie la rondelle 75. L'une de ces saillies vient en prise sur la protubérance 79 de la poignée. Les autres saillies viennent en regard de protubérances homologues, non représentées, sur lesquelles elles sont également vissées. On obtient ainsi une fixation en trois points du radiateur 75 et de la rondelle 70 par rapport à la poignée.

La figure 5 fait encore apparaître des perforations 77A, 77B et 77C, qui existent à la fois dans la rondelle 70 et dans le radiateur 75. Ces perforations logent les trois tétons 819A, 819B et 819C que comporte la pièce 8, dans sa partie annulaire de tête référencée 81 dans son ensemble, comme illustré sur les figures 3 et 4.

La collerette annulaire d'appui que forme radialement cette pièce 81 est en butée contre la face de la rondelle 70, côté poignée.

Cette collerette est fendue en 810, jusqu'à l'épaulement 80 qui sert d'appui au tube de manche 30 ou 60. De la sorte, il est possible, au montage du fer, de faire passer les deux ligatures dans cette fente, alors qu'elles sont d'ores et déjà munies de leurs connecteurs d'extrémités tels que 91 (figures 3 et 4). Ces deux connecteurs vont alors recevoir à leurs extrémités libres les liaisons en cuivre (ou autres) provenant du conducteur d'alimentation 90. Les vis des connecteurs sont ensuite engagées dans des échancrures 840, ménagées dans deux plateaux 84 faisant partie de la pièce 8, et séparées par une cloison isolante que l'on voit en 85 sur la figure 4A, tandis qu'elle apparaît en son entier, c'est-à-dire en 85 et 86, sur les figures 3 et 3A.

Ceci assure tout d'abord le maintien des connecteurs 91, mais aussi et surtout le freinage des vis de ceux-ci. (Une observation attentive montre que sur la figure 4, le connecteur 91-1 est représenté renversé. En principe, les têtes de vis seraient vers le bas.)

La figure 3A montre les deux connecteurs 91-1 et 91-2 ainsi engagés sur le plateau 84.

Pour des applications avec terre (en principe autres que double isolation), la cloison inférieure 86 (figure 3A) est dédoublée en 86-1 et 86-2, espacées l'une de l'autre d'un intervalle permettant le passage d'un fil de terre vers les parties métalliques du corps de chauffe. Ce fil de terre traverse un perçage 813 ménagé dans la tête 81 de la pièce 8 (figures 3 et 4). De l'autre côté, le fil de terre est repris dans un connecteur 93 visible sur la vue en coupe de la figure 3B. Il n'apparaît pas sur la figure 4, mais on y voit le logement 88 définissant une enceinte parallélépipédique pour le logement du connecteur 93.

La pièce 8 se termine axialement à droite par un téton 89, dont le rôle est de centrer la pièce sur une machine de montage automatisé.

Les deux connecteurs 91-1 et 91-2 et, le cas échéant, le connecteur de terre 93 sont reliés aux deux ou trois fils correspondants que comprend le câble d'alimentation 90.

Celui-ci est reçu dans un protège-câble 95, qui, sur la figure 3, est enclipsé à l'intérieur de la queue de la poignée 9. Dans une variante de l'invention, applicable notamment aux fers de petite puissance de la figure 1, le protège-câble 95 est collé à l'intérieur de l'alésage terminal que comporte la poignée 9. Une vis 92 vient assurer le serrage du câble 90 à l'intérieur du protège-câble 95.

Les dispositions décrites ci-dessus ont pour but d'une part de répondre aussi aux normes double isolation, d'autre part de le faire avec un coût de fabrication minimal pour l'ensemble des fers à souder.

Les coupes des figures 3C et 3D, en complément des autres, montrent que le manche 9 du fer peut comporter une saillie en méplat 99, qui en facilite la préhension par l'usager, et peut servir à l'extrémité pour le logement de la vis 92.

**Revendications**

1. Fer à souder électrique,
du type comportant une poignée isolante (9) munie d'un côté d'un câble souple (90) d'alimentation électrique, et prolongée de l'autre côté d'un cache métallique (3; 6) logeant un corps de chauffe (2; 5), et susceptible de recevoir en son nez (1; 4) une panne de soudage (10; 40),
dans lequel le corps de chauffe (2, 5) comprend un tube isolant central (20; 50) formant support pour une résistance chauffante (R) en fil fin bobiné, un tube isolant (21, 51) formant enveloppe, logé entre le tube central et le cache cylindrique externe (23, 53) tandis qu'un tube isolant de manche (30; 60) est logé dans ledit cache (3; 6), entre l'intérieur (8) de la poignée et le corps de chauffe (2; 5), et que deux fils de liaison (31, 32; 61, 62) dits ligatures partent de connecteurs (91, 92) situés dans la poignée, et s'étendent dans des gaines à l'intérieur du tube isolant du manche (30; 60) pour rejoindre respectivement les deux extrémités de la résistance de fil bobiné (R),
le tube enveloppe (21, 51) recevant en pénétration axiale au moins une pièce isolante (30; 55; 60), sensiblement de révolution, traversée en son centre par les ligatures (31, 32; 61, 62), et dépassant axialement le point conducteur le plus en aval (CA) de la résistance (R) ou de la ligature (31) reliée en aval à celle-ci,
caractérisé en ce que le tube enveloppe (21, 51) est cylindrique de section droite constante, que ladite pénétration axiale se fait sur une longueur telle que la plus courte distance entre chacune des ligatures (31, 32; 61, 62) et le manchon métallique externe (3, 6), prise en ligne brisée dans l'air le long de ladite pièce isolante, soit au moins égale à 9,5 mm et en ce que ledit dépassement axial du tube enveloppe est d'au moins 9,5 mm, ce qui permet d'obtenir un fer à haute isolation.

2. Fer à souder selon la revendication 1, caractérisé en ce que certains au moins des tubes isolants (21; 50, 51) sont réalisés en une matière céramique de densité au moins égale à 2,8 environ.

3. Fer à souder selon la revendication 2, caractérisé en ce que la céramique est chargée d'au moins un oxyde ou sel métallique augmentant sa compacité, tel qu'un oxyde, un phosphate, un silicate, un sulfate ou un carbonate de zirconium, d'aluminium, de magnésium ou de baryum.

4. Fer à souder selon l'une des revendications 2 et 3, caractérisé en ce que la densité est d'environ 3,6.

5. Fer à souder selon l'une des revendications précédentes, caractérisé en ce que le tube (20; 50) support de résistance est immobilisé longitudinalement par rapport à la paroi radiale interne (11, 41) du corps de chauffe, du côté du nez du fer (1, 4), ainsi que par rapport à un appui (80) logé dans la poignée (9) du fer, solidairement de celle-ci.

6. Fer à souder selon la revendication 5, dans lequel la panne (40) est reçue dans une douille (42) pénétrant coaxialement le corps de chauffe (5), et dans lequel le tube support de résistance (50) est emmanché partiellement sur cette douille (42), caractérisé en ce que ce tube support (50) et son tube enveloppe (51) s'appuient conjointement sur une rondelle d'amortissement (43), du côté du nez du fer, et en ce qu'à l'autre extrémité, le tube enveloppe (51), qui déborde largement le tube support de résistance (50), reçoit en pénétration axiale un bouchon isolant (55), sensiblement de révolution, creusé en son centre pour recevoir à son tour en pénétration axiale le tube isolant de manche (60), des perforations (551, 552) de ce bouchon permettant le passage des ligatures (61, 62) vers la résistance de fil bobiné (R), lesdites pénétrations étant telles que la distance la plus courte mesurée d'une part en cheminant entre le bouchon (55) et le tube enveloppe (51), d'autre part en cheminant entre le bouchon (55) et le tube isolant de manche (60) soit supérieure ou égale à 9,5 mm.

7. Fer à souder selon la revendication 6, caractérisé en ce qu'un dispositif de centrage souple du tube de manche (60) à l'intérieur du bouchon (55) est défini par les fils de ligature (61, 62) traversant de façon tendue les perforations (551, 552) du bouchon (55).

8. Fer à souder selon la revendication 7, caractérisé en ce que la distance radiale entre les extrémités opposées desdites perforations (551, 552) est sensiblement égale au diamètre intérieur du tube de manche (60), ou légèrement supérieure à celui-ci.

9. Fer à souder selon la revendication 5, dans lequel la panne (10) est reçue dans un alésage (12) limité au nez (1) du fer,
caractérisé en ce que le tube enveloppe (21), qui s'appuie longitudinalement sur la paroi radiale interne (11) du nez, loge intérieurement un bouchon (15), sur lequel s'appuie à son tour, longitudinalement, le tube support de résistance (20), lequel est maintenu à son autre extrémité (200) par le tube de manche, et en ce que le tube enveloppe (21) est solidarisé, en particulier par collage-cimentage, du tube support de résistance (20) et/ou du tube de manche (30).

10. Fer à souder selon la revendication 9, caractérisé en ce qu'un insert isolant guide-fils (25) est interposé entre le tube de manche (30) et le tube support de résistance (20).

11. Fer à souder selon l'une des revendications précédentes, caractérisé en ce que les ligatures (31, 32; 61, 612) sont constituées de deux gros fils vrillés avec le fil fin de résistance, selon un pas inférieur à 1,5 mm environ, de préférence de 0,5 mm environ.

12. Fer à souder selon l'une des revendications précédentes, caractérisé en ce que le manchon métallique (3; 6) est reçu dans la poignée (9) du fer par fixation sur des points répartis (701) d'une rondelle (70) dégagée par ailleurs (805) de la périphérie du manchon, et sur laquelle est fixé extérieurement un radiateur de forme générale annulaire.

13. Fer à souder selon la revendication 12, caractérisé en ce qu'à l'opposé du radiateur (75), la rondelle (70) reçoit en périphérie, avec immobilisation angulaire, une pièce isolante allongée (8), fendue (89) côté rondelle pour permettre au montage du fer le passage des ligatures, vers son centre, où elle est munie d'un épaulement d'appui (80) pour le tube isolant de manche (30; 60), cette pièce isolante comportant ensuite deux plateaux (84), échancrés pour la réception enclipsée de vis de connecteurs (91, 92) pré-montés sur les ligatures, et séparés l'un de l'autre par au moins une cloison isolante (85, 86).

14. Fer à souder selon la revendication 13, caractérisé en ce que la cloison (85, 86) est au moins en partie (86) dédoublée, pour permettre le passage d'un fil de terre, lequel rejoint les parties métalliques du fer à travers un perçage (813) ménagé dans la partie annulaire (81) de ladite pièce (8) côté rondelle, à l'opposé de sa fente (810).

15. Fer selon l'une des revendications précédentes, caractérisé en ce que le tube-support de résistance (20, 50) comporte au moins une gorge périphérique annulaire, en forme de V, logeant conjointement l'extrémité de la résistance et la ligature associée.

**Claims**

1. An electric soldering iron,
of the type comprising an insulating handle (9) provided at one end with flexible electrical power cables (90) and extended at its other end by a metal shield (3; 6) housing a heater body (2; 5), and suitable for receiving a soldering bit (10, 40) at its tip (1; 4),
in which the heater body (2, 5) comprises a central insulating tube forming a support for a heating resistance (R) in the form of a coiled fine wire, and insulating tube (21, 51) forming a shell housed between the central tube and the outer cylindrical shield (23, 53) while an insulating sleeve tube (30; 60) is housed inside said shield (3; 6) between the inside (8) of the handle and the heater body (2; 5), and two connection wires (31, 32; 61, 62) called "ligatures" run from connectors (91, 92) situated in the handle and extend inside sheaths inside the insulating sleeve tube (30; 60) in order to meet respective ones of the two ends of the coiled wire resistance (R),

the shell tube (21, 51) receiving at least one insulating part (30; 50; 60) penetrating axially therein, which part is substantially circularly symmetrical, has the ligatures (31, 32; 61, 62) running along its center, and projects axially beyond the furthest downstream conducting point (CA) of the resistance or the ligature (31) connected downstream therefrom,

the soldering iron being characterized in that the shell tube (21, 51) is cylindrical with constant right section, in that said axial penetration takes place over a length such that the shortest distance between each of the ligatures (31, 32; 61, 62) and the outer metal shield (3, 6) measured as a broken line through air along said insulating part is not less than 9.5 mm, and in that said shell tube projects axially beyond said furthest downstream point by not less than 9.5 mm, thereby making it possible to obtain a high-insulation soldering iron.

2. A soldering iron according to claim 1, characterized in that at least some of the insulating tubes (21; 50, 51) are made of a ceramic material having a relative density of not less than about 2.8.

3. A soldering iron according to claim 2, characterized in that the ceramic is filled with at least one oxide or metal salt increasing its compactness, such as an oxide, a phosphate, a silicate, a sulfate, or a carbonate, of zirconium, aluminum, magnesium, or barium.

4. A soldering iron according to claim 2 or 3, characterized in that the relative density is about 3.6.

5. A soldering iron according to any preceding claim, characterized in that the resistance supporting tube (20; 50) is fixed longitudinally relative to the internal radial wall (11, 41) of the heater body at the tip end of the iron (1, 4), and relative to a bearing surface (80) fixedly received in the handle (9) of the iron.

6. A soldering iron according to claim 5, in which the bit (40) is received in a socket (42) penetrating coaxially into the heater body (5), and in which the resistance support tube (50) is fitted in part over said socket (42), the soldering iron being characterized in that the support tube (50) and its shell tube (51) bear together against a shock absorbing washer (43) towards the tip end of the soldering iron, and in that, at the other end, the shell tube (51) which projects considerably beyond the resistance support tube (50) receives an insulating plug (55) in axial penetration, the plug being substantially a body of revolution having a hollow center for receiving, in turn in axial penetration, the insulating sleeve tube (60), perforations (551, 552) in said plug allowing the ligatures (61, 62) to pass to the coiled wire resistance (R), said penetrations being such that the shortest distance measured firstly following the path between the plug (55) and the shell tube (51), and secondly following the path between the plug (55) and the insulating sleeve tube (60) is not less than 9.5 mm.

7. A soldering iron according to claim 6, characterized in that a flexible centering device for centering the sleeve tube (60) inside the plug (55) is defined by the ligature wires (61, 62) being stretched where they pass through the perforations (551, 552) in the plug (55).

8. A soldering iron according to claim 7, characterized in that the radial distance between the opposite ends of said perforations (551, 552) is substantially equal to or slightly greater than the inside diameter of the sleeve tube (60).

9. A soldering iron according to claim 5, in which the bit (10) is received in a bore (12) limited to the tip (1) of the iron, the soldering iron being characterized in that the shell tube (20) which bears longitudinally against the inner radial wall (11) of the tip receives a plug (15) internally, with the resistance support tube (20) bearing in turn longitudinally thereagainst, the other end (200) of the resistance support tube being held by the sleeve tube, and in that the shell tube (21) is fixed, in particular by gluing/cementing, to the resistance support tube (20) and/or to the sleeve tube (30).

10. A soldering iron according to claim 9, characterized in that a wire guiding insulating insert (25) is interposed between the sleeve tube (30) and the resistance support tube (20).

11. A soldering iron according to any preceding claim, characterized in that the ligatures (31, 32; 61, 62) are constituted by two heavy gauge wires twisted together with the fine resistance wire at a pitch of less than about 1.5 mm, and preferably about 0.5 mm.

12. A soldering iron according to any preceding claim, characterized in that the metal shield (3; 6) is received in the handle (9) of the iron by fixing to points (701) distributed around a washer (70) which elsewhere (805) does not engage the periphery of the shield, a radiator which is generally annular in shape being fixed on the outside of the shield.

13. A soldering iron according to claim 12, characterized in that opposite to the radiator (75), the periphery of the washer (70) receives an elongate insulating part (8) which is prevented from rotating relative thereto, said part being slit (89) at its washer end in order to allow the ligatures to pass inwards during assembly of the soldering iron, the inside of the isolating part being provided with a bearing shoulder (80) for the insulating sleeve tube (30; 60), said insulating part then comprising two notched fins (84) for snap-fastening reception of the screws of connectors (91, 92) premounted on the ligatures and separated from each other by at least one insulating partition (85, 86).

14. A soldering iron according to claim 13, characterized in that said partition (85, 86) is doubled up (86) at least in part in order to allow an earth wire to pass, said earth wire interconnecting the metal portions of the iron via a hole (813) provided in the annular portion (81) of said part (8) at its washer end, and opposite to its slot (810).

15. A soldering iron according to any preceding claim, charaoterized in that the resistance supporting tube (20, 50) includes at least one V-shaped annular peripheral groove receiving both the end of the resistance and the associated ligature.

**Patentansprüche**

1. Elektrischer Lötkolben mit einem isolierenden Griff (9), der an einem Ende mit einem flexiblen Kabel (90) für die Stromversorgung versehen und am anderen Ende durch eine metallische Verkleidung (3; 6) zur Aufnahme eines Heizkörpers (2; 5) verlängert ist, die an der Spitze (1; 4) eine Aufnahme für einen Lötkopf (10; 40) aufweist, wobei der Heizkörper (2; 5) ein mittleres isolierendes Rohr (20, 50) zur Aufnahme für einen Heizwiderstand (R) aus feinem gewendelten Draht, ein isolierendes Rohr (21, 51) als Mantel zwischen dem mittleren Rohr und der äußeren zylindrischen Verkleidung enthält, mit einem isolierenden Griffrohr (30, 60) in der Verkleidung (3, 6) zwischen der Innenseite (8) des Griffes und dem Heizkörper (2, 5), mit zwei Verbindungsdrähten (31, 32, 61, 62) die von Verbindern (91, 92) in dem Griff abzweigen und sich umhüllt innerhalb des isolierenden Griffrohres (30, 60) erstrecken, bis sie mit den beiden Enden des Widerstandes aus gewendeltem Draht (R) zusammentreffen, wobei das Mantelrohr (21, 51) mit axialer Durchdringung mindestens ein Isolierstück (30, 55, 60) aufnimmt, das im wesentlichen kreissymmetrisch ist und in seiner Mitte von den Verbindungsdrähten (31, 32, 61, 62) durchquert wird und in Axialrichtung über den am weitesten hinten gelegenen leitenden Punkt (CA) des Widerstandes (R) oder des diesem Widerstand nachgeschalteten Verbindungsdrahts (31) vorsteht, dadurch gekennzeichnet, daß das Mantelrohr (21, 51) zylindrisch ist und einen konstanten Querschnitt hat, daß die axiale Durchdringung auf einer solchen Länge erfolgt, daß die kürzeste Strecke zwischen jedem der Verbindungsdrähte (31, 32, 61, 62) und dem äußeren Metallstutzen (3, 6), gebrochen entlang des Isolierstücks in der Luft verlaufend, mindestens 9,5 mm und der axiale Überstand des Mantelrohrs mindestens 9,5 mm beträgt, wodurch ein Lötkolben mit hohem Isolierwert geschaffen werden kann.

2. Lötkolben nach Anspruch 1, dadurch gekennzeichnet, daß mindestens einige der isolierenden Rohre (21, 50, 51) aus einem keramischen Werkstoff mit einer Dichte von mindestens etwa 2,8 hergestellt sind.

3. Lötkolben nach Anspruch 2, dadurch gekennzeichnet, daß der keramische Werkstoff zur Erhöhung seiner Kompaktheit mit mindestens einem Metalloxid oder -salz wie zum Beispiel ein Zirkonium-, Aluminium-, Magnesium- oder Bariumoxid, -phosphat, -silikat, -sulfat oder -karbonat gefüllt ist.

4. Lötkolben nach einem der Ansprüche 2 und 3, dadurch gekennzeichnet, daß die Dichte etwa 3,6 beträgt.

5. Lötkolben nach einem der vorstehenden Ansprüche, dadurch gekennzeichnet, daß das Aufnahmerohr (20, 50) für den Widerstand gegenüber der radialen Innenwand (11, 41) des Heizkörpers, an der Seite der Spitze des Kolbens (1, 4) sowie gegenüber einer Auflage (80) in dem Griff des Kolbens, mit diesem fest verbunden, in Längsrichtung unbeweglich ist.

6. Lötkolben nach Anspruch 5, bei dem der Lötkopf (40) in einer Buchse (42), die koaxial durch den Heizkörper (5) verläuft, aufgenommen wird und das Aufnahmerohr (50) des Widerstandes zum Teil auf dieser Buchse (42) aufgezogen ist, dadurch gekennzeichnet, daß dieses Aufnahmerohr (50) und sein Mantelrohr (51) sich zusammen auf einer Federscheibe (43) an der Seite der Spitze des Kolbens abstützen und dadurch, daß am anderen Ende das Mantelrohr (51), das weit über das Aufnahmerohr (50) des Widerstandes übersteht, in der axialen Durchdringung einen im wesentlichen kreissymmetrischen Isolierstopfen (55) aufnimmt, der in seiner Mitte hohl ist, um seinerseits mit axialer Durchdringung das Isolierrohr (60) des Griffes aufzunehmen, wobei Bohrungen (551, 552) dieses Stopfens den Durchgang der Verbindungsdrähte (61, 62) zu dem Widerstand (R) aus gewendeltem Draht gestatten und die genannten Durchdringungen so beschaffen sind, daß der kürzeste Abstand, einerseits zwischen dem Stopfen (55) und dem Mantelrohr (51) und andererseits zwischen dem Stopfen (55) und dem Isolierrohr (60) des Griffes gemessen, größer als oder gleich 9,5 mm ist.

7. Lötkolben nach Anspruch 6, dadurch gekennzeichnet, daß eine flexible Zentrierung des Griffrohres (60) innerhalb des Stopfens (55) definiert wird durch die Verbindungsdrähte (61, 62), die in gespannter Form durch die Bohrungen (551, 552) des Stopfens (55) verlaufen.

8. Lötkolben nach Anspruch 7, dadurch gekennzeichnet, daß der radiale Abstand zwischen den gegenüberliegenden Enden der Bohrungen (551, 552) im wesentlichen gleich dem Innendurchmesser des Griffrohres (60) ist oder geringfügig größer.

9. Lötkolben nach Anspruch 5, wobei der Lötkopf (10) in einer auf die Spitze (1) des Kolbens begrenzten Bohrung (12) aufgenommen wird, dadurch gekennzeichnet, daß das Mantelrohr (21), das sich in Längsrichtung an der radialen Innenwand (11) der Spitze abstützt, in seinem Inneren einen Stopfen (15) aufnimmt, auf dem sich das Aufnahmerohr (20) des Widerstandes seinerseits in Längsrichtung abstützt, das an seinem anderen Ende (200) durch das Griffrohr gehalten wird, und daß das Mantelrohr (21) insbesondere durch Einkleben/Einkitten fest mit dem Aufnahmerohr (20) des Widerstandes und/oder dem Griffrohr (30) verbunden ist.

10. Lötkolben nach Anspruch 9, dadurch gekennzeichnet, daß ein Isoliereinsatz (25) zur Drahtführung zwischen dem Griffrohr (30) und dem Aufnahmerohr (20) des Widerstandes eingebaut ist.

11. Lötkolben nach einem der vorstehenden Ansprüche, dadurch gekennzeichnet, daß die Verbindungsdrähte (31, 32, 61, 62) aus zwei dicken, mit dem feinen Widerstandsdraht verdrillten Drähten mit einer Steigung von weniger als etwa 1,5 mm, vorzugsweise etwa 0,5 mm bestehen.

12. Lötkolben nach einem der vorstehenden Ansprüche, dadurch gekennzeichnet, daß der Metallstutzen (3, 6) im Griff (9) des Kolbens durch Befestigung an im Abstand angeordneten Punkten (701) auf einer Scheibe (70), die im übrigen (805) Abstand vom Umfang des Stutzens hat, befestigt ist, wobei auf der Scheibe an ihrer Außenseite ein allgemein ringförmiger Radiator angebracht ist.

13. Lötkolben nach Anspruch 12, dadurch gekennzeichnet, daß entgegengesetzt zu dem Radiator (75) die Scheibe (70) am Umfang mit winkelförmiger Befestigung ein längliches Isolierstück (8) aufnimmt, das auf der Scheibenseite geschlitzt (89) ist, um bei der Montage des Kolbens das Durchführen der Verbindungsdrähte zur Mitte, in der das Stück mit einem Absatz für die Auflage (80) des Isolierrohres (30, 60) des Griffes versehen ist, zu gestatten, wobei dieses Isolierstück zwei Platten (84) enthält, die zur klemmenden Aufnahme der Schrauben von Verbindern (91, 92) eingeschnitten sind, und die Verbinder an den Verbindungsdrähten vormontiert und voneinander durch mindestens eine isolierende Trennwand (85, 86) getrennt sind.

14. Lötkolben nach Anspruch 13, dadurch gekennzeichnet, daß die Trennwand (85, 86) mindestens zum Teil (86) halbiert ist, um das Durchführen eines Erdungsdrahtes zu ermöglichen, der über eine scheibenseitige Bohrung (813) im ringförmigen Teil (81) des Stückes (8) gegenüber seinem Schlitz (810) an die Metallteile des Lötkolbens anschließt.

15. Lötkolben nach einem der vorstehenden Ansprüche, dadurch gekennzeichnet, daß das Aufnahmerohr (20, 50) des Widerstandes mindestens eine Umfangsnut in V-Form als gemeinsamen Sitz für das Ende des Widerstandes und den dazugehörigen Verbindungsdraht enthält.

FIG. 1

## FIG. 2

EP 0 202 167 B1

## FIG. 3

EP 0 202 167 B1

FIG. 3A

85  9  91_1
91_2
84
86_1  86_2

FIG. 3B

88  9
93

FIG. 3C

9  99

FIG. 3D

9  92

FIG. 4

88
85
840
89
84
81
810
819C
813
819A
819B
31 ou 61
91_1

FIG. 5

705C  74A  75  70
39 ou 69  77A
701A
77C
701C  74B
74C  705A
705B  77B  701B2  701B1
701B1

EP 0 202 167 B1